# EUROPÄISCHE PATENTSCHRIFT

(11) **EP 0 486 578 B1**
(45) Veröffentlichungstag und Bekanntmachung des Hinweises auf die Patenterteilung: **20.10.1993**
(21) Anmeldenummer: 90912411.7
(22) Anmeldetag: 20.08.1990
(51) Int. Cl.: A62D 3/00, B09B 5/00

(54) **VERFAHREN ZUR REINIGUNG UND AUFBEREITUNG VON VERUNREINIGTEM GUT**
PROCESS FOR PURIFYING AND PROCESSING CONTAMINATED MATERIALS
PROCEDE D'EPURATION ET DE TRAITEMENT DE PRODUITS CONTAMINES

(30) Priorität: 18.08.1989 DE 3927295; 17.10.1989 DE 3934510; 17.10.1989 DE 3934511
(43) Veröffentlichungstag der Anmeldung: 27.05.1992
(73) Patentinhaber: TERDEKON GMBH ERDDEKONTAMINIERUNG, D-70191 Stuttgart (DE)
(72) Erfinder: HOHNECKER, Helmut, D-7151 Allmersbach/Tal (DE)
(74) Vertreter: Schuster, Gregor, Dipl.-Ing.
(86) Internationale Anmeldenummer: DE9000634
(87) Internationale Veröffentlichungsnummer: WO9102565

(56) Entgegenhaltungen:
- EP-A- 0 228 626
- EP-A- 0 275 096
- EP-A- 0 379 261
- WO-A-89/05778
- DE-A- 2 848 729
- DE-A- 3 525 701
- DE-A- 3 628 030
- DE-A- 3 720 833
- DE-A- 3 806 820
- US-A- 4 511 657
- Chem. Ing. Tech., Band 56, Nr. 4, 1984, Heinz Brauer: "Biologische Abluftreinigung", S. 279-286

## Beschreibung

Die Erfindung betrifft ein Verfahren zur Reinigung und Aufbereitung von verunreinigtem Gut nach der Gattung des Hauptanspruchs.

Neben Verfahren zur Reinigung von verunreinigtem Gut, insbesondere Erdreich, mittels spezieller Bodenwaschverfahren (vgl. WLB, Wasser, Luft und Boden 3/1989 S. 54 bis 58) sind bereits Verfahren zur Reinigung und Aufbereitung von verunreinigtem Gut bekannt, bei denen Mikroorganismen zum Abbau von Verunreinigungen, insbesondere von Mineralölen oder sonstigen Kohlenwasserstoffen, in Erdreich verwendet werden. Dabei wird so vorgegangen, daß die Behandlungszeit derart ausgewählt wird, daß sich die Mikroorganismen von selbst ansiedeln, vermehren und entsprechend wirksam werden können. Da bei diesen Verfahren die zur gewünschten Reinigung notwendige mikrobielle Substanz bzw. Masse sich zuerst in situ entwickeln muß, weisen diese Verfahren den Nachteil auf, daß je nach Art und Grad der Kontaminierung zur ausreichenden Reinigung unter Umständen eine lange Behandlungsdauer erforderlich ist.

Bei dem aus der DE-OS 37 20 833 bekannten Verfahren wird daher dem verunreinigten Gut, hier Erdreich, eine Auswahl an Mikroorganismen in Reinkultur zugesetzt, die zum Abbau der kontaminierenden Stoffe geeignet sind. Diese Mikroorganismen werden entsprechend den Verunreinigungen aus einem Katalog ausgesucht und zusammengestellt und dem zu reinigenden Erdreich zusammen mit einer passenden Nährlösung zugegeben.

Es ist daher Aufgabe der Erfindung, ein Verfahren der eingangs genannten Art derart weiterzubilden, daß einerseits der Einsatz und die Anreicherung von abbauenden Mikroorganismen erheblich vereinfacht, beschleunigt und verbilligt wird und andererseits der Abbau von Schadstoffen und sonstigen Verunreinigungen intensiviert und beschleunigt wird.

### Vorteile der Erfindung

Diese Aufgabe wird durch das erfindungsgemäße Verfahren mit den kennzeichnenden Merkmalen des Hauptanspruchs gelöst. Aus der EP 0 379 261 ist zwar bekannt, verunreinigtem Gut Mist, Kompost oder Schlamm zuzugeben; diese Zugabe erfolgt aber bei dem dort beschriebenen Verfahren zur Nährstoffversorgung der in Reinkultur zugegebenen Mikroorganismen und zur Verbesserung der Bodenstruktur. Auch ist dieser Druckschrift nicht zu entnehmen, daß Belebtschlamm aus Kläranlagen verwendet wird, wie er im Hauptanspruch der vorliegenden Erfindung definiert ist.

Durch die Zugabe von belebten Substanzen in Form von Belebtschlamm aus Kläranlagen, nämlich Schlamm des aeroben Behandlungsbeckens, frischer Überschußschlamm aus dem aeroben Behandlungsbecken und/oder in der Gärungsphase befindlicher Schlamm aus dem Faulturm, beispielsweise von kommunalen Abwasseraufbereitungsanlagen, wird zugleich Nährsubstrat und eine universelle Anreicherungsquelle für Mikroorganismen dem zu behandlenden Gut zugeführt, die die vorhandenen Verunreinigungen degradieren und damit dekontaminieren.

Es hat sich nämlich überraschenderweise gezeigt, daß es zur Reinigung von kontaminiertem Gut, wie industriellen Abfällen bzw. Reststoffen oder verunreinigtem Erdreich, nicht notwendig ist, besonders ausgewählte Mikroorganismen dem Behandlungsgut zuzusetzen, sondern daß es ausreicht, ein anderes Abfallprodukt, nämlich den oben bezeichneten Belebtschlamm, dem verunreinigtem Gut zuzusetzen. Dieser Belebtschlamm enthält nämlich durch das sehr breite Spektrum der anfallenden Abfallstoffe eine Mikroorganismenflora, die prinzipiell alle zur Dekontaminierung von biologisch abbaubaren Verunreinigungen geeigneten Mikroorganismen enthält, d.h. spezielle Mikroorganismen, die zum Abbau oder Kometabolismus dieser Substanzen fähig sind.

Diese Mikroorganismen aus dem Belebtschlamm sind bereits an die Verunreinigungen präadaptiert und insbesondere auch an die Umgebung in der Behandlungsfläche. Durch das erfindungsgemäße Verfahren werden die zum Abbau der vorhandenen Verunreinigungen geeigneten Mikroorganismen spezifisch angereichert, so daß eine biologische Dekontamination des verunreinigten Gutes allein mit den Mikroorganismen aus dem Belebtschlamm möglich ist. Auf diese Weise werden zwei verschiedene Abfallprodukte entgiftet bzw. entsorgt und gegebenfalls ein neues verwertbares Wirtschaftsgut in Form von rückgewonnenen Mineralstoffen bzw. Metallen und deren Salze, sowie neues, wiederverwendbares Erdreich erhalten. Da der Belebtschlamm gleichzeitig die zur Anreicherung der Mikroorganismen notwendigen Nährstoffe enthält, ist insgesamt eine erhebliche Kostenreduzierung gegeben. Aufgrund der bereits vorhandenen Adaption der Mikroorganismen an die abzubauenden Verunreinigungen und die Umgebung wird einerseits die Behandlungsdauer erheblich reduziert und andererseits die Lebensdauer der Mikroorganismen erhöht. Die zur Dekontamination notwendigen Mikroorganismen liegen also bereits in Mikrobiozönosen und mit Nährstoffen versorgt vor.

Entsprechend der im verunreinigten Gut enthaltenen Schadstoffe kann der verwendete Belebtschlamm speziell bei schwer abbaubaren oder stark toxischen Substanzen so gewählt werden, daß eine bestmögliche Präadaption der Mikroorganismen vorliegt, d.h. der zugefügte Belebtschlamm wird nach Möglichkeit solchen Kläranlagen entnommen, die dieselben oder ähnliche Schadstoffe enthalten, wie sie im kontaminierten Gut vorhanden sind. Dadurch liegen die zum Abbau geeigneten Mikroorganismen bereits angereichert vor. Ebenso kann durch den Einsatz von aerobem und/oder anaerobem Faulschlamm die für die jeweiligen Substanzen optimal präadaptierte Mikroflora eingestellt werden.

Neben der Verwendung von Belebtschlämmen aus kommunalen Kläranlagen sind auch Belebtschlämme aus industriellen Kläranlagen verwendbar, die üblicherweise frei von pathogenen Keimen und daher hygienisch unbedenklich sind. Das erfindungsgemäße Verfahren ist besonders gut zur Dekontamination von verunreinigtem Erdreich oder Bauschutt geeignet. Es ist jedoch auch möglich, in der Industrie anfallende Reststoffe und Schutt mit dem erfindungsgemäßen Verfahren zu dekontaminieren. Mit dem Verfahren werden die im verunreinigten Gut enthaltenen Schad- und Giftstoffe sowohl abgebaut als auch entfernt. Daher eignet sich das erfindungsgemäße Verfahren auch dann, wenn im kontaminierten Gut giftige Metalle, insbesondere Schwermetalle, in für Mikroorganismen zugänglicher Form vorliegen. Mikroorganismen, welche die Fähigkeit aufweisen, Metalle zu binden, liegen ebenfalls in den Mikrobiozönosen des Belebtschlammes vor. Ganz besonders geeignet ist das erfindungsgemäße Verfahren jedoch zur Entfernung von organischen Verunreinigungen wie Mineralöle, insbesondere Erd- und Altöl, sowie organische Lösungsmittel, chlorierte Kohlenwasserstoffe, adsorbierbare Halogene und von Phenolen sowie PAK's und Nitroaromate.

Nach einer Ausgestaltung der Erfindung wird in einem mehrstufigen Verfahren zunächst anaerober und anschließend aerober Belebtschlamm verwendet. Es ist nämlich bekannt, daß beispielsweise höher chlorierte Chlorkohlenwasserstoffe zur vollständigen Mineralisation zunächst anaerob dechloriert und anschließend aerob aufbereitet werden müssen. Diesem Umstand wird bei dem erfindungsgemäßen Verfahren zusätzlich dadurch Rechnung getragen, daß zunächst anaerober Faulschlamm ohne Belüftung und anschließend aerober Belebtschlamm unter Belüftung des verunreinigten Guts zugegeben wird.

Nach einer weiteren Ausgestaltung der Erfindung wird der Belebtschlamm vor dem Einbringen in die Behandlungsfläche in einem Bioreaktor an die Verunreinigung adaptiert. Auf diese Weise können die zum Abbau der Verunreinigungen notwendigen Mikroorganismen bereits vor Zugabe des Belebtachlamms zum verunreinigten Gut bevorzugt gezüchtet und angereichert werden. Die Behandlungsdauer wird dadurch herabgesetzt.

Nach einer weiteren Ausgestaltung der Erfindung wird das Abwasser der Behandlungsfläche einer Nachkläreinheit zugeführt. Durch diese Nachkläreinheit kann vorteilhafterweise überschüssiger Schlamm aus dem System entnommen werden, indem das Schlammwassergemisch getrennt wird. Durch Rückführen des belebten Substrates wird ein optimaler Wirkprozeß in den Biozönosen aufrechterhalten. Der überschüssige Schlamm kann dem System entnommen und aufbereitet oder aber der Behandlungsfläche zugegeben werden. Nicht benötigtes Prozeßwasser kann in die öffentliche Kanalisation oder in ein Gewässer abgeleitet werden. Der Einsatz von Fällungschemikalien und Flockenhilfsmittel kann sinnvoll und zneckmäßig sein, um die Absetzbarkeit der Belebtschlammflocken zu erhöhen.

Nach einer weiteren Ausgestaltung der Erfindung wird das Abwasser der Behandlungsfläche über einen Bioreaktor zur Bewässerung der Behandlungsfläche rückgeführt. Das Abwasser enthält neben von der Behandlungsfläche ausgewaschenen Substanzen insbesondere mineralischen und organischen Schlamm sowie die Mikrobiozönosen mit den jeweiligen Mikroorganismen. Vorzugsweise wird das Abwasser vollständig, zumindest jedoch teilweise in einen Bioreaktor geleitet, worin die im Abwasser enthaltene belebte Substanz zusätzlich mit Nährstoffen versorgt und kultiviert bzw. angereichert werden kann.

Nach einer Weiterbildung dieser Merkmale wird das im Bioreaktor enthaltene Abwasser rezirkuliert. Es hat sich als zweckmäßig erwiesen, nur einen Teil des im Bioreaktor enthaltenen Abwasserschlammgernisches der erneuten Bewässerung der Behandlungsfläche zuzuführen und den verbleibenden Teil des Gemisches über eine Rezirkulation wieder in den Bioreaktor einzuleiten.

Nach einer weiteren Ausgestaltung der Erfindung wird das verunreinigte Gut zusätzlich thermisch behandelt. Diese Ausgestaltung dient zur Beschleunigung des Verfahrens und zur Entgiftung und Minimierung organischer Bestandteile sowie zur Minimierung von Geruchseinheiten. Hygienisch bedenkliche und pathogene Keime können so entfernt werden. Hierzu eignet sich auch eine aerob-thermophile Stabilisierung des Belebtschlammes, bei welcher durch Zufuhr von Sauerstoff zum Belebtschlamm in einem Bioreaktor Wärme erzeugt und die Temperatur des Belebtschlammes auf 50 bis 55°C erhöht wird. Nach einer Standzeit von ein bis zwei Tagen bei dieser Temperatur sind die pathogenen Keime abgetötet und es wird ein Belebtschlamm erhalten, der hygienisch unbedenklich ist.

Zusätzlich kann nach einer Weiterbildung dieser Merkmale teildekontaminiertes Gut und erzeugter Überschußschlamm in einer Trocknungsanlage weitergehend aufbereitet bzw. dekontaminiert und in eine verwertbare Form übergeführt werden. Bei diesem sogenannten integrativen chemischphysikalisch-biologisch-thermischen Verfahren (ICPBT-Verfahren) wird das verunreinigte Gut in ein zusätzliche thermische Behandlungsstufe eingebracht, dort behandelt und anschließend in den Prozeßablauf rückgeführt.

Es sind bereits thermische Verfahren zur Entgiftung und Reinigung von verunreinigtem Gut bekannt, bei denen durch schonende thermische Behandlung unter anderem organische Bestandteile und Verbindungen in ihrer Gesamtmenge und Konzentration reduziert werden (Hohnecker: Grundlagen und Stand der Entwicklung bei Trommeltrocknern, in technische Akadamie, Wuppertal 9/89). Hierbei wird das verunreinigte Gut gleichzeitig auf ein Minimum reduziert, wodurch Deponieraum eingespart wird. Ein weiterer Vorteil dieses Verfahrens liegt in der kurzen Behandlungsdauer und der hohen Effizienz, wodurch Kosten eingespart werden. Trockengut kann unter bestimmten Voraussetzungen hervorragend umweltfreundlich verwertet werden, beispielsweise als Brennstoff oder in der Asphaltindustrie (vgl. Hohnecker: Vortrag beim 61. Siedlungswasserwirschaftlichen Symposium der TU Stuttgart, März 87). Durch die zusätzliche thermische Behandlung wird der Abbau und die Entfernung von Schad- und Giftstoffen im verunreinigten Gut gefördert.

Nach einer weiteren Ausgestaltung der Erfindung wird das Verfahren zur biologischen Dekontaminierung von verunreinigtem Gas verwendet. Es sind bereits Verfahren zur biologischen Abluftreinigung bekannt, bei denen Mikroorganismen zum Abbau von Verunreinigungen, insbesondere von biologisch leicht abbaubaren organischen Stoffen oder Feinstäuben anorganischer und organischer Natur verwendet werden. Hierzu zählen Biofilter und Biowäscher, insbesondere Kreuzstromwäscher.

Neueste biologische Abluftbehandlungsverfahren nutzen die Gasdurchlässigkeit von Silikonschläuchen, die in einem mit Abwasserschlamm befüllten speziellen Reaktor untergebracht sind. Ferner ist bekannt, daß Abluft über Biofilter (feucht) oder Biowäscher (naß) teilgereinigt werden können; diese Verfahren arbeiten jedoch jeweils mit speziellen Biozönosen, die sich entweder im System entwickeln oder aber gezielt von außen zugesetzt werden. Da sich bei diesen Verfahren die zur gewünschten Reinigung notwendige Masse an mikrobieller Substanz zuerst in situ entwickeln muß, weisen diese Verfahren den Nachteil auf, daß - je nach Art und Grad der Kontaminierung - zur ausreichenden Reinigung eine lange Behandlungsdauer erforderlich ist. Das Zusetzen von Mikroroganismen von außen stellt andererseits einen erheblichen Kostenfaktor dar.

Daneben ist es zur Reinigung von gasförmigen Medien bekannt, diese mit speziellen Filtern (Textil- oder Elektrofiltern) zu reinigen. Es ist üblich, verunreinigte Abluft in speziellen Anlagen zu verbrennen, insbesondere bei sehr groben Masseströmen. Diese Verfahren sind jedoch teuer und eignen sich auch nicht für jeden Anwendungsfall, insbesondere nicht für jede Größenordnung des zu reinigenden Abluftstromes. Außerdem entstehen große Mengen von Reststoffen, beispielsweise Gips bei der Rauchgaswäsche, die ihrerseits einer Entsorgung zugeführt werden müssen, da nur ein geringer Teil dieser Reststoffe einer Verwertung zugeführt werden kann. Insofern wird dadurch zusätzlich wertvoller Deponieraum verbraucht, der in nächster Zukunft kaum mehr zur Verfügung stehen wird.

Bei dem erfindungsgemäßen Verfahren zur Reinigung und Aufbereitung von gasförmigem verunreinigtem Gut wird das verunreinigte Gas, insbesondere in einem geschlossenen Kreislauf, in einen Bioreaktor eingebracht und dort durch Verunreinigungen und Schadstoffe entfernende bzw. abbauende Mikroorganismen und Bakterien behandelt, wobei entstehendes Abwasser aufgefangen, aufbereitet und aktiviert und zur weiteren Reinigung wieder in den Bioreaktor rückgeführt wird und wobei entstehende Reststoffe abgetrennt und über chemisch-physikale sowie gegebenenfalls thermische Verfahren aufbereitet und einer Verwertung oder Entsorgung zugeführt werden.

Beim Durchströmen der Abluft wird gleichzeitig das im Bioreaktor enthaltene Passagemedium weitgehend stabilisiert und darin enthaltene Giftstoffe abgebaut und damit auf umweltfreundliche Weise unschädlich gemacht. Wie bei festem oder flüssigem verunreinigtem Gut wird auch bei gasförmigem verunreinigtem Gut die zuvor verwendete Biomasse zweckmäßigerweise zuvor aufbereitet, d.h., an die jeweilige Verunreinigung adaptiert. Hierbei wird das große Anpassungsvermögen vieler im Belebtschlamm enthaltener Mikroorganismen und Bakterien an sich ändernde äußere Bedingungen genutzt. Dazu wird zuerst der Belebtschlamm - erforderlichenfalls nach Vorbehandlung und Aufbereitung, beispielsweise Homogenisierung - in einem speziellen Reaktor, der mit der Verunreinigung beschickt wird, kultiviert und aktiviert. Auf diese Weise können die notwendigen Mikroorganismen, bevorzugt vor Ort, gezüchtet werden.

Mit dem erfindungsgemäßen Verfahren werden die in der verunreinigten Abluft enthaltenen Schad- und Giftstoffe nicht nur durch die Mikroorganismen abgebaut und entfernt, sondern auch in die Wasser- oder Schlammphase überführt. Gleichzeitig wird das Schlammsubstrat weiter stabilisiert. Daher eignet sich das erfindungsgemäße Verfahren auch dann, wenn in der schadstoffbelasteten Abluft giftige Metalle bzw. Metalle in giftiger Konzentration, insbesondere Schwermetalle, in für Mikroorganismen zugänglicher Form vorliegen. Die Schwermetallabscheidung aus der Wasser- bzw. Schlammphase kann in einer Nachbehandlungsstufe beispielsweise durch Ionentauscher erfolgen.

Ganz besonders geeignet ist das erfindungsgemäße Verfahren jedoch zur Entfernung von organischen, insbesondere aromatischen Verunreinigungen, wie leicht und schwer flüchtige Chlorkohlenwasserstoffe, Benzole, Toluole, Xylole, Dichlormethan und n-Buthanol.

Vorzugsweise wird die kontaminierte Abluft vollständig in einen Bioreaktor geleitet, worin die im Belebtschlamm enthaltenen Mikroorganismen gegebenenfalls zusätzlich mit Nährstoffen versorgt, kultiviert und vermehrt werden. Insbesondere ist auf optimale Lebensbedingungen der Biozönosen zu achten, unter anderem durch Einstellung des optimalen PH-Wertes und der optimalen Temperatur. Bei der Durchführung des erfindungsgemäßen Verfahrens hat es sich auch als zweckmäßig erwiesen, einen Teil des im Bioreaktor enthaltenen Abwasserschlammsubstrats kontinuierlich oder diskontinuierlich aufzubereiten und zu aktivieren und anschließend über eine Rückführleitung wieder dem Bioreaktor zuzuführen. Es ist zneckmäßig, mehrere Bioreaktoreinheiten in Kaskadenform anzuordnen; ebenso ist es zweckmäßig, abwechselnd Aerob- und Anaerobstufen anzuordnen. Hierdurch wird eine umfassende Abgasreinigung ermöglicht. Entstehendes Abwasser und Kondensate werden dem System kontinuierlich entnommen und aufbereitet.

Das Einbringen der kontaminierten Abluft in das System erfolgt durch Kompression. Eine Aspirationsanlage hält das System im Unterdruck, so daß keine Geruchsemissionen von dem geschlossenen System ausgehen.

Nach einer weiteren Ausgestaltung der Erfindung werden die aus der Bioreaktoreinheit abgesaugte Abluft und deren Restinhaltstoffe wieder in das System rückgeführt. Hierdurch werden Emissicnen an die Umwelt wirkungsvoll vermieden und eine weitgehend vollständige Reinigung der Abluft gewährleistet.

Nach einer weiteren Ausgestaltung der Erfindung wird die aus dem Bioreaktor abgesaugte Abluft über eine nachgeschaltete Biofilteranlage geleitet. Hierdurch wird die abgesaugte Abluft gereinigt und von Geruchstoffen befreit und kann anschließend in die Atmosphäre abgegeben oder in geeigneten Anlagen als Brennstoff verwertet werden.

Zwei Anordnungen zur Durchführung des erfindungsgemäßen Verfahrens mit einem Biobeet bzw. Bioreaktor als Behandlungsfläche sind in der Zeichnung dargestellt und im folgenden beschrieben.

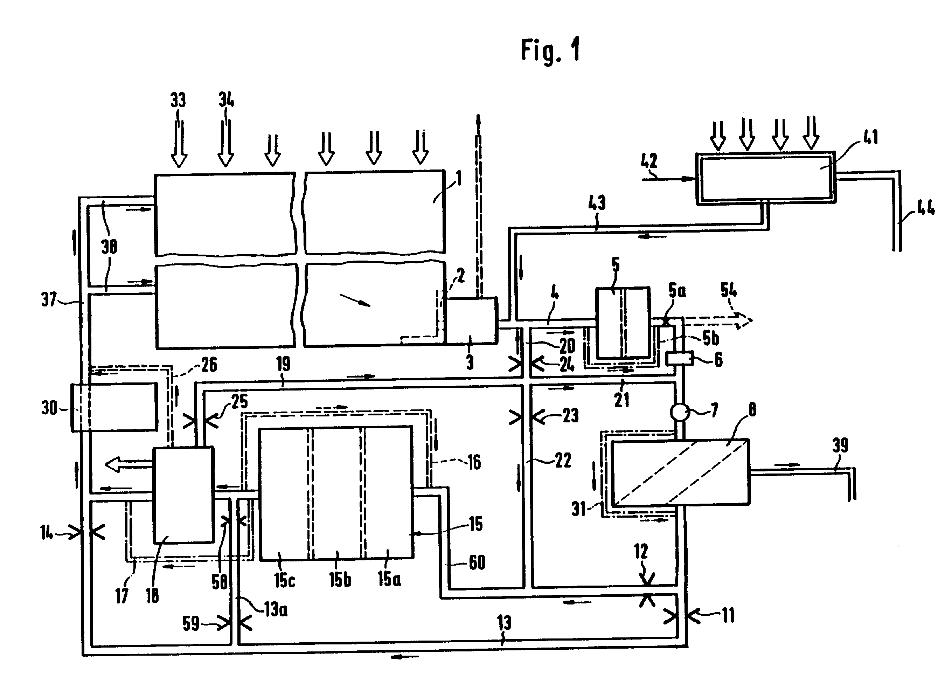

- Fig. 1: zeigt eine Anordnung zur Reinigung und Aufbereitung von verunreinigtem Erdreich mit zusätzlicher thermischer Behandlung und
- Fig. 2: eine Anordnung zum Reinigen und Aufbereiten von verunreinigten gasförmigen Medien, jeweils in vereinfachter schematischer Darstellung.

Das kontaminierte Erdreich wird mit geeignetem Gerät, beispielsweise mit Schaufelladern, in die Behandlungsfläche 1 eingebracht. Es handelt sich dabei um eine größere Fläche, deren Unterlage - von unten nach oben - vorzugsweise durch Rohplanung, Feinplanung, Flächendichtung, mineralische Tragschicht, Filtervlies, eine weitere Tragschicht sowie darüber eine circa 15 cm dicke Betontragschicht gebildet werden kann, so daß gegenüber dem Untergrund absolute Dichtheit gewährleistet ist. Die Behandlungsfläche 1 kann offen oder auch überdacht ausgeführt werden. Insbesondere die Uberdachung bzw. volle Einhausung der Behandlungsfläche 1 wie auch der biologischen Reinigungsstufe 15 erlaubt einen witterungsunabhängigen, ganzjährigen Betrieb bei optimalen Bedingungen. Anschließend wird dem kontaminierten Erdreich Belebtschlamm aus kommunalen oder industriellen Kläranlagen zugesetzt. Belebtschlamm aus industriellen Anlagen befindet sich oft bereits in einem Zustand, der für diesen Zweck hygienisch unbedenklich ist. Die hygienische Unbedenklichkeit ist jedoch keine Voraussetzung für das Verfahren an sich, erleichtert aber den Umgang mit den Substraten. Das Einbringen des Erdreichs ist mit dem Pfeil 34, die interne (Prozeßwasser) und externe (beispielsweise Leitungswasser) Bewässerung mit Pfeil 33 und das Einbringen von Belebtschlamm mit Pfeil 51 dargestellt.

Von einem Punkt 2 der Behandlungsfläche 1, welcher der tiefste Punkt der Behandlungsfläche ist, fließt austretendes Wasser in einen Sammel- und Absetzschacht 3 und von diesem mittels eines Überlaufs 4 in eine Leichtstoffabscheideanlage 5. Die sich in dem Absetzschacht 3 absetzenden bzw. abgeschiedenen Stoffanteile werden wieder der Behandlungsfläche 1 zugeführt. Abgeschiedene Leichtstoffe aus der Leichstoffabscheideanlage 5 werden getrennt in entsprechenden Zeitabständen verwertet bzw. entsorgt oder nach Anforderung in Anlage 41 aufbereitet und anschliepend einer Verwertung bzw. Entsorgung zugeführt. Die wässrige Phase gelangt von dort über ein Pumpwerk unter Erfassung der Wassermenge bei 6 und des PH-Wertes bei 7 in die Vorbehandlungsstufe 8 oder unter Umgehung der Vorbehandlungsstufe 8 über den Bypass 31 zur biologischen Stufe 15 bzw. je nach Stellung der Schieber 11, 12, 59 und 14 direkt in den Pufferbehälter 30 oder in das Nachklärbecken 18.

In Abhängigkeit vom Kontaminierungsgrad und vom Dekontaminierungsziel wird die vorbehandelte wässrige Phase über Leitung 60 direkt einer biologischen Behandlungsstufe 15 zugeleitet. Dies ist im wesentlichen ein belüfteter Behalter (beispielsweise feinblasige Druckluftbelüftung) mit verschiedenen Kaskaden 15a, 15b und 15c, dem geeignete Nähr- und Ausgangssubstanzen unter Einstellung des C/N/P-Verhältnisses zugeführt werden können, um den auf der Behandlungsfläche vorhandenen und im System zirkulierenden Mikroorganismen die Möglichkeit zu Wachstum, Reaktivierung und Vermehrung zu geben. Die dafür erforderliche Druckluft liefert eine Gebläsestation, die auf dem Betriebsgelände an geeigneter Stelle untergebracht werden kann. Die Luftzufuhr erfolgt über geeignete Rohrleitungen. Zusätzlich erforderliches Prozeßwasser wird von außerhalb zugesetzt.

Im Ausführungsbeispiel ist eine Rezirkulation von dem in Fließrichtung letzten Abschnitt 15c zum ersten Abschnitt 15a vorhanden, um unter Aufrechterhaltung des Fließ- und Abbauvorgangs die Biozönosen gezielt im jeweils erforderlichen Umfang in der biologischen Reinigungsstufe 15 zu erhalten, das Schlammalter zu erhöhen und nur jeweils einen Teil dieses Systems an den Pufferbehälter 30 weiterzugeben. Vom Pufferbehälter 30 erfolgt die weitere Zuführung des nunmehr mit entsprechenden Mikroorganismen angereicherten und aktivierten Wassertelebtschlammgemisches über die Leitung 37 auf die Behandlungsfläche 1, wobei wie schematisch bei 38 angedeutet entsprechende Einrichtungen zur gleichmäßigen Verteilung vorgesehen sein können, beispielsweise Verrieselungsanlagen. Über diese Verteilungseinrichtung 38 kann ebenfalls bei Bedarf Wasser zur Befeuchtung der Behandlungsfläche 1 zugeführt werden.

Grundsätzlich ist es angezeigt, das dekontaminierte Gut mittels Entwässerungsmaschinen zu entwässern und dadurch das entstandene Restvolumen zu verkleinern. Es kommen hierfür in Betracht: Dekanter, Zentrifugen, Siebbandpressen, Filterpressen, etc. Entstehendes Filtratwasser kann ohne Probleme in der biologischen Reinigungsstufe behandelt werden.

Zur weitergehenden Dekontaminierung wie auch zur zusätzlichen Beschleunigung der Dekontaminierungsprozesse ist die weitergehende Aufbereitung sowohl des auf der Behandlungsfläche 1 dekontaminierten Gutes als auch der in der Nachkläreinheit anfallenden Schlämme oder auch beider Stoffgruppen zusammen mittels Trocknung, beispielsweise nach dem System TCW, sinnvoll. Die Praxis zeigt, daß durch Trocknung primär eine signifikante Minimierung der zu entsorgenden Mengen sowie eine zusätzliche Minimierung von Inhaltstoffen aus Abwasser und kontaminiertem Gut, insbesondere organische und anorganische Verbindungen, erreicht werden kann. Durch die signifikante Minimierung des zu entsorgenden Gutes kann Deponievolumen eingespart und die hohen Kosten für Transport, Lager etc. verringert werden. Bei der Trocknung anfallende Brüden, Kondensate, Waschwässer, etc. werden in die Reinigungsanlage rückgeführt und dort biologisch, chemisch und physikalisch aufbereitet.

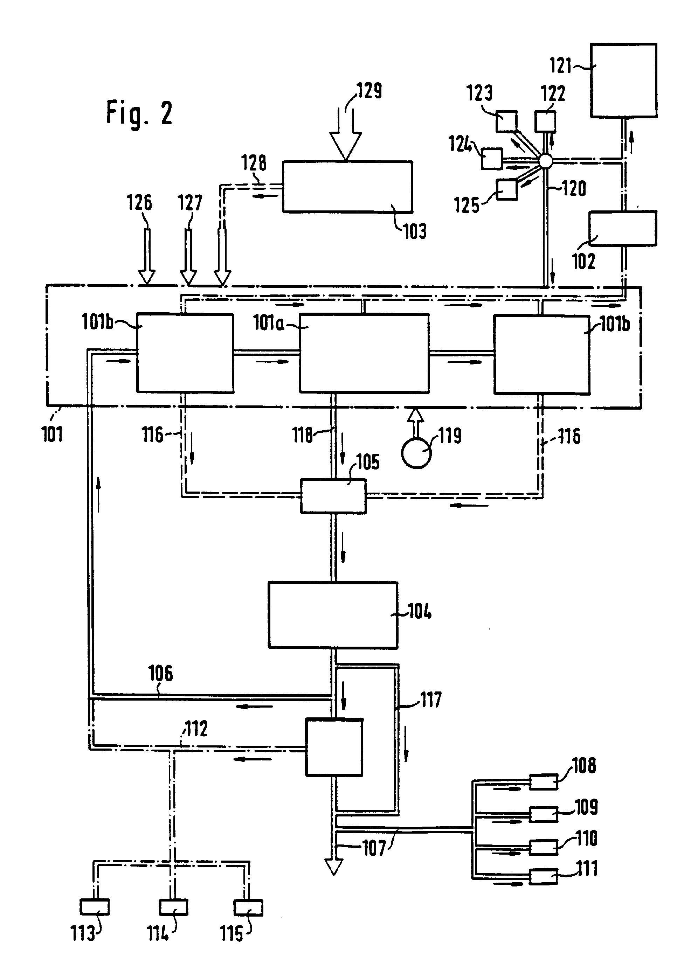

Das verunreinigte gasförmige Medium wird wie in Fig. 2 dargestellt über ein Transportsystem (Leitungsnetz) erfaßt und gesammelt, sodann komprimiert und in den Bioreaktor 101 eingetragen. Der Bioreaktor 101 ist ein geschlossener, mit Belebtschlamm aus kommunalen oder industriellen Kläranlagen befüllter Behälter , der einen witterungsunabbangigen, ganzjährigen Betrieb bei optimalen Bedingungen erlaubt. Je nach Schlammart wird der jeweilige Reaktormodul als Aerobreaktor 101a oder Anaerobreaktor 101b oder in Kombination aerob/anaerob oder anaerob/aerob/anaerob betrieben.

Das Einbringen der gasförmigen Medien ist mit dem Pfeil 126 und das Einbringen von Schlammsubstrat mit dem Pfeil 127 dargestellt. Eine Aspirationsanlage 102 hält das System im Unterdruck, so daß hier keine Geruchsemissionen entstehen können.

Unabhängig von der Art der Verunreinigung, dem Verunreinigungsgrad und dem Reinigungsziel kann es sinnvoll sein, die Abluft vor der Einleitung in den Bioreaktor 101 in einer Stufe 103 vorzubehandeln, beispielsweise in Strippanlagen. Die zu reinigende Abluft wird über eine Zuleitung 129 der Vorbehandlungsstufe 103 und über eine Leitung 128 dem Bioreaktor 101 zur weiteren Behandlung zugeführt.

Ebenso hängt der verfahrenstechnische Aufbau der Bioreaktoreinheit, wie beispielsweise die Anordnung der Anaerob- und Aerobstufan in Kaskaden, von Art und Grad der Verunreinigung sowie vom Reinigungsziel ab. Dabei sind grundsätzlich die Betriebsparameter, PH-Wert, Temperatur, Nährstoffverhältnis (C/N/P-Verhältnis) laufend zu kontrollieren und im erforderlichen Bereich zu fahren, um ein optimales Milieu für die Biozönosen einzustellen und damit das gewünschte Reinigungsergebnis sicherzustellen.

Die Aerobstufe ist im wesentlichen ein belüfteter Behälter, beispielsweise mit feinblasiger Druckluftbelüftung oder Belüftung durch Zugabe von Reinsauerstoff aus einem Vorratsbehälter 119 oder auch rückgeführter Abluft, oder über Wendelbelüfter von außen eingetragene Luft, der in der Regel mehrstufig ausgeführt wird. Die erforderliche Druckluft liefert eine Gebläsestation, die auf dem Betriebsgelände an geeigneter Stelle ebenfalls in Modulbauweise untergebracht werden kann. Die Luftzufuhr erfolgt über geeignete Leitungen.

Das Gesamtsystem ist explosionsgeschützt und korrosionssicher auszuführen. Die abgesaugte Abluft ist ständig auf die entsprechenden Parameter wie Metangas, SO₂, etc. zu prüfen.

Abgetrenntes Prozeßwasser, welches vornehmlich aus den Aerobstuf en abgezogen wird, wird im erfindungsgemäßen Verfahren in einer biologischen Aufbereitungsanlage 104 separat aufbereitet. Hierzu sind bekannte Verfahren wie Belebtschlammverfahren oder Tropfkörperverfähren geeignet. Gegebenfalls kann eine Vorbehandlung dieser Prozeßwässer mittels physikalisch-chemischer Verfahren wie beispielsweise Fällung oder Flockung in der Vorstufe 105 zweckmäßig sein.

Derart aufbereitetes Prozeßwasser (aktiviert und kultiviert) wird bevorzugt über eine Leitung 106 dem Gesamt-System wieder zugeführt oder über eine Leitung 107 in das Kanalnetz abgeleitet oder einer kommunalen Abwasserreinigungsanlage 108, einer Trocknungsanlage 109, einer Verbrennungsanlage 110 oder einem Biobeet 111 zugeführt. Beim Aufbereitungsprozeß entstehende Schlämme werden über eine Leitung 112 in den Bioreaktor 101 zurückgeleitet oder aber über eine Trocknungsanlage 113 oder andere thermische Verfahren zusammen mit dem im Gesamtprozeß entstehenden Reststoffschlammgemisch umweltfreundlich entsorgt oder über eine Anlage 114 zur Dekontaminierung von verunreinigtem Gut umweltfreundlich verwertet oder einer Ensorgung zugeführt. Eine weitere Entsorgungsmöglichkeit ist in der Verbrennung oder Vergasung der entstandenen Restmengen in einer entsprechenden Anlage 115 zu sehen.

Es ist grundsätzlich angezeigt, das dekontaminierte Gut mittels Entwässerungsaggregat zu entwässern und dadurch das im erfindungsgemäßen Verfahren entstandene Restvolumen zu minimieren. In Betracht kommen hierfür Dekanter, Zentrifugen, Siebband- und Kammerfilterpressen, Trockner und Verbrennungsanlagen . Entstehendes Filtratwasser kann problemlos in der biologischen Aufbereitungsanlage 104 behandelt werden.

Die über die Aspirationsanlage 102 abgesaugte Abluft wird im erfindungsgemäßen Verfahren über eine Leitung 120 wieder dem System zugeführt. Auf den Sollwert gereinigte Abluft kann zur Geruchsminderung über Biofilter 121 nachgereinigt werden. Bei Eignung als Brennstoff, beispielsweise bei hohen CH₄-Anteilen, ist im erfindungsgemäßen Verfahren eine Verwertung der Luft in einer Trocknungsanlage 122, beispielsweise nach dem System TCW, oder zur Erzeugung von Strom in einem Blockheizkraftwerk 123 vorgesehen. Die in der Abluft enthaltene Wärmeenergie wird im erfindungsgemäßen Verfahren entsprechend der angestrebten Verwertung in einem Wärmetauscher gewonnen. Weitergehende Restschadstoffminimierungen sind über Textilfilteranlagen 124 oder aber durch Verbrennungsanlagen 125 möglich.

Die Dimensionierung des im erfindungsgemäßen Verfahren zu verwendenden Bioreaktors ist nicht besonders kritisch. Es hat sich als zweckmäßig erwiesen, den Bioreaktor mit einer Raumbelastung von 1 bis 3 kg BSB₅/m³ d, einer Schlammbelastung von 0,25 bis 1,0 kg BSB₅/kg TS d und einer Sauerstofflast von mindestens 2,5 mg/kg, vorzugsweise jedoch zwischen 1,5 und 2,5 mg O₂/l bei einem Trockensubstanzgehalt von 3 bis 4 kg/m³ zu betreiben. Sinnvollerweise erfolgt die Raumaufteilung des Bioreaktors in Kaskadenform. Dies ist insbesondere bei erforderlicher Zugabe von Fällungs- und Flockungsmitteln vorteilhaft.

## Patentansprüche

1. Verfahren zur biologischen Dekontaminierung von verunreinigtem Gut in einem geschlossenen Kreislauf mittels Mikroorganismen, wobei das verunreinigte Gut in eine Behandlungsfläche eingebracht, bewässert und mit den die Verunreinigung entfernenden Mikroorganismen behandelt wird und wobei entstehendes Abwasser aufgefangen und wieder zur erneuten Bewässerung rückgeführt wird, dadurch gekennzeichnet, daß dem verunreinigten Gut auf der Behandlungsfläche belebte Substanzen in Form von Belebtschlamm aus Kläranlagen zugegeben werden, nämlich Schlamm des aeroben Behandlungsbeckens und/oder frischer Überschußschlamm des aeroben Behandlungsbeckens und/oder in der Gärungsphase befindlicher Schlamm aus dem Faulturm.

2. Verfahren nach Anspruch 1, dadurch gekennzeichnet, daß in einem mehrstufigen Verfahren zunächst anaerober und anschließend aerober Belebtschlamm verwendet wird.

3. Verfahren nach Anspruch 1 oder 2, dadurch gekennzeichnet, daß die Behandlungsfläche bei der Verwendung von anaerobem Belebtschlamm unbelüftet inkubiert wird, während das vesunreinigte Gut bei der Verwendung von aerobem Belebtschlamm belüftet wird.

4. Verfahren nach einem der Ansprüche 1 bis 3, dadurch gekennzeichnet, daß der Belebtschlamm vor dem Einbringen in die Behandlungsfläche in einem Bioreaktor an die Verunreinigung adaptiert wird.

5. Verfahren nach einem der Ansprüche 1 bis 4, dadurch gekennzeichnet, daß das Abwasser der Behandlungsfläche einer Nachkläreinheit zugeführt wird.

6. Verfahren nach Anspruch 5, dadurch gekennzeichnet, daß das Abwasser der Behandlungsfläche in einem der Behandlungsfläche nachgeschalteten Absetzbecken mit anschließender Leichtstoffabscheideanlage (5) vorgereinigt wird.

7. Verfahren nach einem der Ansprüche 1 bis 4, dadurch gekennzeichnet, daß das Abwasser der Bebendlungsfläche über einen Bioreaktor zur Bewässerung der Behandlungsfläche rückgeführt wird.

8. Verfahren nach einem der Ansprüche 4 bis 7, dadurch gekennzeichnet, daß das im Bioreaktor enthaltene Abvasser rezirkuliert wird.

9. Verfahren nach einem der vorbergehenden Ansprüche, dadurch gekennzeichnet, daß das verunreinigte Gut zusätzlich thermisch behandelt wird.

10. Verfahren nach Anspruch 9, dadurch gekennzeichnet, daß teildekontaminiertes Gut und erzeugter Überschußschlamm in einer Trocknungsanlage weitergehend aufbereitet bzw. dekontaminiert und in eine verwertbare Form übergeführt werden.

11. Verfahren nach Anspruch 10, dadurch gekennzeichnet, daß bei der Trocknung entstehende Brüden, Kondensate und sonstige wässrige Phasen in die biologische Reinigungsstufe rückgeführt und dort gereinigt werden.

12. Verfahren nach Anspruch 10 oder 11, dadurch gekennzeichnet, daß Abwärme von der Trocknung zur Beheizung der biologischen Reinigungsstufe dient.

13. Verfahren nach einem der vorhergehenden Ansprüche, dadurch gekennzeichnet, daß das Verfahren zur biologischen Dekontaninierung von verunreinigtem Gas verwendet wird.

14. Verfahren nach Anspruch 13, dadurch gekennzeichnet, daß das verunreinigte Gas in einem Bioreaktor belebte Substanzen in Form von aeroben und/oder anaeroben Belebtschlämmen durchstrrömt.

15. Verfahren nach Anspruch 14, dadurch gekennzeichnet, daß das zu reinigende gasförmige Medium in einer dem Bioreaktor vorgeschalteten Vorbehandlungsstufe vorgereinigt wird.

16. Verfahren nach Anspruch 14 oder 15, dadurch gekennzeichnet, daß die aus der Bioreaktoreinheit abgesaugte Abluft und deren Restinhaltstoffe wieder in das System rückgeführt werden.

17. Verfahren nach einem der Ansprüche 14 bis 16, dadurch gekennzeichnet, daß die aus dem Bioreaktor abgesaugte Abluft über eine nachgeschaltete Biofilteranlage geleitet wird.

## Claims

1. A process for the biological decontamination of polluted material in a closed circuit by means of micro-organisms, in which the polluted material is brought onto a treatment surface, irrigated, and treated by the micro-organisms which remove the pollution, and in which the waste water generated is collected and returned for further use in irrigation, the process being characterised by stimulated substances in the form of activated sludge from sewage treatment plants being added to the polluted material on the treatment surface, to be specific sludge from the aerobic treatment basins and/or fresh surplus sludge from the aerobic treatment basin and/or the sludge that is found in the decomposition tower during the fomentation phase.

2. A process along the lines of Claim 1, characterised by first anaerobic and then aerobic activated sludge is used in a multi-stage process.

3. A process along the lines of Claims 1 and 2, characterised by the treatment surface being incubated without ventilation during the use of anaerobic activated sludge, while the polluted material is ventilated during the use of aerobic activated sludge.

4. A process along the lines of Claims 1 to 3, characterised by the activated sludge being adapted in a bio-reactor to suit the pollutant prior to being brought to the treatment surface.

5. A process along the lines of Claims 1 to 4, characterised by the waste water being led from the treatment surface to a final settling unit.

6. A process along the lines of Claim 5, characterised by the waste water from the treatment surface being pre-cleaned in a subsequent settling basin followed by a separation unit for light particles (5).

7. A process along the lines of Claims 1 to 4, characterised by the waste water from the treatment surface being returned via a bio-reactor to irrigate the treatment surface.

8. A process along the lines of Claims 4 to 7, characterised by the waste water contained in the bio-reactor being recirculated.

9. A process along the lines of one of the foregoing Claims, characterised by the polluted material being additionally treated thermally.

10. A process along the lines of Claim 9, characterised by the partly decontaminated material and the surplus sludge thus generated being further treated or decontaminated in a drying plant and transferred in a re-usable form.

11. A process along the lines of Claim 10, characterised by the water vapours, condensed liquids, and other watery phases being led back into the biological purification stage and purified there.

12. A process along the lines of Claims 10 or 11, characterised by the warmth given off by and other usable energy remaining from the drying process being used to heat the biological purification stage.

13. A process along the lines of one of the foregoing Claims, characterised by the process being used for the biological decontamination of polluted gas.

14. A process along the lines of Claim 13, characterised by the polluted gas flowing through activated substances in the form of aerobic and/or anaerobic activated sludges in a bio-reactor.

15. A process along the lines of Claim 14, characterised by the gaseous medium which is to be purified being pre-cleaned in a pre-treatment stage arranged ahead of the bio-reactor.

16. A process along the lines of Claims 14 or 15, characterised by the waste air extracted from the bio-reactor unit and the residual materials it contains being led back into the system.

17. A process along the lines of Claims 14 to 16, characterised by the waste air extracted from the bio-reactor being led to a subsequent bio-filtration plant.

## Revendications

1. Procédé concernant la décontamination biologique de matériaux pollués et ce en circuit fermé au moyen de microorganismes, les matériaux contaminés se trouvant dans un endroit prévu pour être traité, irrigé et traité au moyen des microorganismes chargés d'éliminer les impuretés, les eaux usées en résultant étant récupérées et servant à nouveau à l'irrigation ; caractérisé par le fait que le matériau polllué se trouvant sur la surface de traitement reçoit des substances actives sous forme de boue activée en provenance de station d'épuration, à savoir de la boue du bassin de traitement aérobie et/ou bien de la boue fraiche restante en provenance du bassin de traitement aérobie et/ou bien de la boue se trouvant dans sa phase de fermentation provenant de la tour de fermentation.

2. Procédé selon la spécification décrite sous 1 et caractérisé par le fait que dans un procédé comportant plusieurs phases, on utilise d'abord de la boue anaérobie et ensuite de la boue active aérobie.

3. Procédé selon les spécifications 1 ou 2, caractérisé par le fait que la surface de traitement est incubée sans être aérée en employant de la boue active anaérobie, alors que le matériau pollué traité au moyen de boue active aérobie est aéré.

4. Procédé selon l'une des spécifications de 1 à 3, caractérisé par le fait que, dans un bioréacteur, la boue activée est adaptée aux impuretés avant d'être remise à la surface de traitement.

5. Procédé selon l'une des spécifications de 1 à 4, caractérisé par le fait que les eaux usées en provenance de la surface de traitement sont amenées à une unité de décantation finale.

6. Procédé selon la spécification 5, caractérisé par le fait que les eaux usées de la surface de traitement sont prénettoyées dans un bassin de décantation en aval de celui-ci et passent ensuite dans une installation adjacente de séparation des matières légères (5).

7. Procédé selon les spécifications de 1 à 4, caractérisé par le fait que les eaux usées de la surface de traitement sont recyclées dans un bioréacteur pour irriger ensuite la surface de traitement.

8. Procédé selon les spécifications de 4 à 7, caractérisé par le fait que les eaux usées contenues dans le bioréacteur recirculent.

9. Procédé selon l'une des spécifications précédentes, caractérisé par le fait que le matériau pollué subi en plus un traitement thermique.

10. Procédé selon la spécification 9, caractérisé par le fait que le matériau en partie décontaminé et la boue produite en excédent sont en majeure partie traités dans une installation de séchage et décontaminés pour pouvoir être transformés de façon réutilisable.

11. Procédé selon la spécification 10, caractérisé par le fait que les vapeurs chaudes, les produits de condensation et les autres phases aqueuses produites au cours du séchage sont remises en circulation pour être nettoyés à l'étage du traitement biologique.

12. Procédé selon la spécification 10 ou 11 caractérisé par le fait que la chaleur perdue et toute autre énergie utile en provenance du séchage sert à chauffer l'étage de nettoyage biologiqe.

13. Procédé selon l'une des spécifications précédentes, caractérisé par le fait que le procédé est utilisé pour la décontamination biologique de gaz pollué.

14. Procédé selon la spécification 13, caractérisé par le fait que le gaz pollué circule dans un bioréacteur où se trouvent des substances actives sous forme de boues aérobies et/ou de boues anaérobies.

15. Procédé selon la spécification 14, caractérisé par le fait que le milieu gazeux a purifier subi un prénettoyage avant de passer dans le bioréacteur.

16. Procédé selon les spécifications 14 ou 15, caractérisé par le fait que l'air d'évacuation ainsi que les résidus en provenance de l'unité du bioréacteur sont recyclés dans le système.

17. Procédé selon l'une des spécifications de 14 à 16, caractérisé par le fait que l'air d'évacuation en provenance du bioréacteur passe par une installation de biofiltrage située en aval.
